# EUROPEAN PATENT SPECIFICATION

(11) **EP 1 806 903 B1**
(45) Date of publication and mention of the grant of the patent: **04.11.2009**
(21) Application number: 06024691.5
(22) Date of filing: 29.11.2006
(51) Int. Cl.: H04L 29/08

(54) **Custom presence icons**
Personalisierte Präsenzikone
Icônes de présence personnalisées

(30) Priority: 22.12.2005 US 315068
(43) Date of publication of application: 11.07.2007
(73) Proprietor: Alcatel Lucent, 75008 Paris (FR)
(72) Inventor: Jachner, Jack, Lexington, MA 02420 (US)
(74) Representative: Schmidt, Werner Karl

(56) References cited:
- WO-A-03/084258
- US-A1- 2005 144 333
- ROSENBERG CISCO SYSTEMS J: "Presence Authorization Rules" IETF STANDARD-WORKING-DRAFT, INTERNET ENGINEERING TASK FORCE, IETF, CH, vol. simple, no. 4, 24 October 2005 (2005-10-24), XP015042695 ISSN: 0000-0004
- SCHULZRINNE COLUMBIA U V GURBANI LUCENT P KYZIVAT J ROSENBERG CISCO H: "RPID: Rich Presence Extensions to the Presence Information Data Format (PIDF)" IETF STANDARD-WORKING-DRAFT, INTERNET ENGINEERING TASK FORCE, IETF, CH, vol. simple, no. 10, 20 December 2005 (2005-12-20), XP015044136 ISSN: 0000-0004

## Description

### BACKGROUND OF THE INVENTION

### Technical Field of the Invention

The present invention relates in general to a presence-based communication system, and in particular, to providing custom presence icons.

### Description of Related Art

Presence-based interactive communication systems enable callees (presentities) to publish, in real-time, their presence information, such as the availability and current status of the callee devices/applications, to callers (presence watchers). Presence systems typically incorporate presence servers to manage the presence information for a plurality of presentities. In general, presence servers receive updated presence information from various presence sources, such as telephone applications or instant messaging applications, and aggregate the received presence information to reflect the presence state of the presentities. For example, when a presentity initiates or receives a voice call on his or her desktop phone, the presence server is notified and the presence state of the presentity is changed to "On the Phone."

Presence servers further interface with presence user clients on watcher terminals to provide the current presence state of presentities to watchers of the presentities to assist the watchers in establishing real-time voice, text and/or multimedia communication sessions with the presentities. For example, a presence user client can include a graphical user interface for displaying the real-time presence information on the terminal in the form of icons and/or text strings. However, today's presence user clients are capable of displaying only a limited number of icons associated with a presentity presence state. For example, a green icon is commonly used to indicate the presentity is available, while a red icon is commonly used to indicate the presentity is unavailable.

These icons are generic in nature and are not customizable by the presentity to represent a particular likeness, personality trait, company logo or other individual preference of the presentity. In addition, such generic icons cannot be tailored for different watchers. Furthermore, generic icons are typically not suitable for use in other presence applications, such as service applications. As an example, if a customer is a watcher of a company customer service presentity, the "presence state" of the customer service presentity may be dependent upon the state of the customer service queue and/or the state of a particular service for the watcher (e.g., waiting, in-service, completed, etc.).

From WO 03/0084285 A1 a presence architecture is known for providing presence information, wherein the presence information received by watchers depends upon hardware and software capabilities of a watcher unit. The presence information provided to watchers depends upon personal identity of the watcher receiving the presence information. Based upon the received presence information, an icon uniquely associated with a particular presentity is displayed at the watcher unit.

From working document of the internet engineering task force (IETF), J. Rosenberg, "Presence authorization rules, draft IETF-symbol, presence-rules-04", October 24, 2005, available via HTTP://www.ietf.org, a framework for realizing authorization rules that specify what presence information can be given to which watchers is known. The authorization rules enable to perform an authorization from the presentity prior to handing out presence information to a watcher. The authorization process is started for each watcher subscribing to a presence server in order to receive presence information.

From another working document of the internet engineering task force (IETF), H. Schulzrinne et al., RPID: Rich Presence Extensions to the Presence Information Data Format (PIDF), draft-IETF-symbol-RPID-10", December 20, 2005, available via HTTP://www.ietf.org, a data format for describing rich presence information is known. The rich presence information comprises elements that allow to describe presence information in more detail. The data format may include a pointer to an icon representing the current status of a presentity.

Nowadays, a presentity may be available via several media types, each media type might have different rules for determining whether the presentity is available via this media type or not. Therefore, what is needed is the ability to clearly communicate to watchers whether a presentity is available to engage in real-time communication sessions on one or more of these media types.

### SUMMARY OF THE INVENTION

The invention is defined as set out in independent claims 1 and 7.

Embodiments of the present invention provide a presence system that enables presentities to customize their presence icons. The presence system includes a presence server for receiving icon information from a presentity, in which the icon information defines one or more custom presence icons associated with the presentity. The presence server also receives a different watcher view rule for each of the custom presence icons from the presentity. The presence server provides the icon information to the watchers of the presentity in accordance with the watcher view rules. The presence server determines a media status and an availability of the presentity to engage in real-time communication sessions on one or more of these media types. Therefore, the presence server evaluates for each media type a maximum number of interactions that are supported by the presentity. In one embodiment, one of the watcher view rules is a watcher identity to provide different custom presence icons to different watchers. In another embodiment, one of the watcher view rules is a presence state of the presentity to provide different custom presence icons for different presence states of the presentity.

In a further embodiment, the presence system includes a presence user client associated with a select one of said watchers. The presence user client receives the icon information from the presence server based on the watcher view rules and generates each of the custom presence icons in the received icon information. In still a further embodiment, the presence user client maintains the icon information within a cache. In an exemplary embodiment, the presence server assigns an icon identifier to each of the custom presence icons and provides the icon identifier, along with the icon information, to the presence user client of the select watcher. Thereafter, the presence server can provide presence information and an icon identifier associated with the presence information to the presence user client, and the presence user client can index on the cache using the received icon identifier to retrieve and display the custom presence icon for the presence information.

Embodiments of the present invention further provide a method for providing custom presence icons. The method includes receiving icon information from a presentity, in which the icon information defines one or more custom presence icons associated with the presentity, and receiving a different watcher view rule for each of the custom presence icons from the presentity. The method further includes providing the icon information to watchers of the presentity in accordance with the watcher view rules.

### BRIEF DESCRIPTION OF THE DRAWINGS

A more complete understanding of the present invention may be obtained by reference to the following detailed description when taken in conjunction with the accompanying drawings wherein:
FIGURE 1 illustrates an exemplary presence system in accordance with embodiments of the present invention;
FIGURE 2 illustrates an exemplary presence system for providing custom presence icons, in accordance with embodiments of the present invention;
FIGURE 3 illustrates an exemplary presence system for providing different icons to different watchers, in accordance with embodiments of the present invention;
FIGURE 4 illustrates an exemplary presence system for providing different icons for different presence states, in accordance with embodiments of the presence invention;
FIGURE 5 is a flowchart illustrating an exemplary process for providing custom presence icons, in accordance with embodiments of the present invention; and
FIGURE 6 illustrates an exemplary process for caching custom presence icons, in accordance with embodiments of the present invention.

### DETAILED DESCRIPTION OF THE DRAWINGS

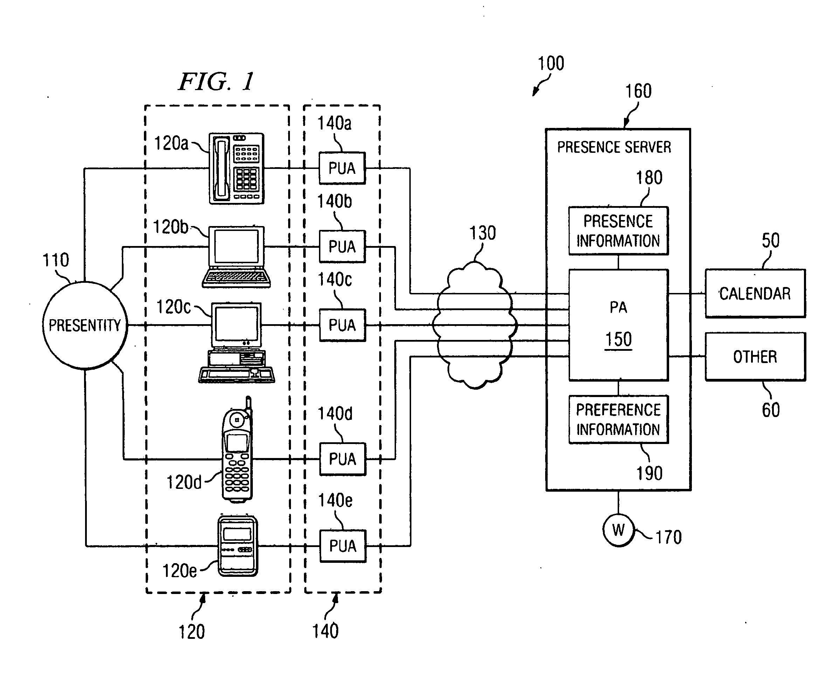

Referring to FIGURE 1, there is illustrated an exemplary presence system 100 capable of implementing various embodiments of the present invention. The presence system 100 includes one or more presentities (one of which is shown for convenience) 110 and one or more terminals 120 associated with the presentity 110. The presentity 110 represents the callee and provides presence information on the callee's presence status to the presence system 100. Each terminal 120 is a physical communications device capable of sending and/or receiving communications over a communications network 130. Examples of such terminals 120 include, but are not limited to, a desktop phone 120a, a laptop computer 120b, a personal computer 120c, a cell phone 120d and a personal digital assistant (PDA) 120e. In FIGURE 1, the communications network 130 represents any type of network over which media (e.g., circuit-switched or packet-switched voice or data) may be sent. For example, the communications network 130 can include the Public Switched Telephone Network (PSTN), Public Land Mobile Network (PLMN), one or more private local area networks (LANs), the Internet and/or any other type or combination of networks.

The presence system 100 further includes one or more presence user agents 140 (PUAs), a presence agent (PA) 150, a presence server 160 and one or more watchers 170 of the presentity 110. The PUAs 140 are capable of manipulating and providing presence information for the presentity 110. In FIGURE 1, a separate PUA 140 is shown for each terminal 120. However, it should be understood that in other embodiments, the number of PUAs 140 can vary based on the number and type of terminals 120, the applications supported by the terminals 120 and the system configuration. Each PUA 140 represents a telephony application that independently generates a component of the overall presence information for a presentity 110. Typically, PUA 140 generates presence information when a change in presence status occurs. Examples of changes in presence status include, but are not limited to, turning on and off a terminal 120, modifying the registration from a terminal 120 and changing the instant messaging status on a terminal 120. As an example, when a presentity initiates or answers a phone call, the telephone application notifies the presence server to set the presentity's presence status to "On the Phone."

The presence information from each of the PUAs 140 is collected by one or more presence agents (PAs) 150. In FIGURE 1, only one PA 150 is shown for simplicity. However, it should be understood that in other embodiments, there can be multiple PAs 150 for a presentity 110, each of which is responsible for a subset of the total subscriptions (requests for presence information from watchers 170) currently active for the presentity 110.

In addition, the PA 150 collects presence information from one or more calendar/scheduler applications 50 (e.g., Microsoft Exchange Server®, IBM Lotus Notes®, Meeting Maker® or other similar application) and other sources 60 of presence information (e.g., an instant messaging application). For example, if a presentity has a meeting scheduled on his or her calendar from 10:00 a.m. to 12:00 p.m., at 10:00 a.m., the calendar/scheduler application 50 notifies the PA 150 to set the presentity's presence status to "In a Meeting."

The PA 150 aggregates the presence information from each of the sources (e.g., PUA's 140, calendar 50 and other sources 60) and maintains the current complete presence information for the presentity 110. The presence information 180 indicates, for example, the availability of the presentity, the current activity of the presentity, the local time where the presentity is located, the current location of the presentity and the current status of the active terminals and/or applications running on active terminals. The PA 150 is further operable to provide the presence information to one or more watchers 170 (callers or communication session initiators) who have subscribed to the presence service of the presentity 110.

The presence server 160 further stores preference information 190 (e.g., terminal preferences) for the presentities 110 and watchers 170 of the presence system 100. For example, the preference information 190 can include both presentity preference information (e.g., privacy filters) set by the presentity 110 for each watcher 170 and watcher preference information (e.g., watcher filters) set by each watcher 170 for presentities 110. The preference information 190 operates to filter the presence information 180 of a presentity 110 provided to a watcher 170 to accommodate privacy concerns, prioritization requirements, administrator policies, security considerations and other individual preferences.

The presence server 160 is a physical entity that can operate as either the PA 150 or as a proxy server for routing requests from watchers 170 to the PA 150. The presence server 160 stores the presence information 180 and preference information 190 for a plurality of presentities 110 and watchers 170. Thus, the PA 150, in combination with the presence server 160, is operable to receive presence information of the presentity 110 from the PUAs 140, receive requests from watchers 170 for the presence information and provide the presence information to the watcher(s) 170. When acting as a PA 150, the presence server 160 can also be co-located with a PUA 140.

The presence system 100 uses a presence protocol to provide presence services to presentities 110 and watchers 170. An example of a presence protocol that can be used in the presence system 100 is the Session Initiation Protocol (SIP), as described in J. Rosenberg, et al., "SIP: Session Initiation Protocol" RFC: 3261, June 2002 and in A. Roach, et al., "Session Initiation Protocol (SIP) - Specific Event Notification," RFC: 3265, June 2002. SIP is an application-layer control protocol used to create, modify and terminate communication (voice, text and/or multimedia) sessions. SIP can be used with other protocols, such as the Real-time Transport Protocol (RTP), the Real-Time Streaming Protocol (RTSP), the Session Description Protocol (SDP), the International Telecommunication Union - Telecommunications ("ITU-T") H.263 standard (video CODEC), the G.711 and G.729 standards (audio CODECs), and other or additional standards or protocols. As will be appreciated, other or additional protocols and configurations may be used.

SIP networks are capable of routing requests from any user on the network to the server that maintains the registration state for a user. Thus, SIP networks enable a caller (watcher) to transmit a SUBSCRIBE request for presence information relating to a particular callee (presentity 110) to be routed to the presence server 160 that maintains the presence information for the presentity 110. In operation, the presence server 160 and PA 150 may be co-located with the SIP proxy/registrar for efficiency purposes.

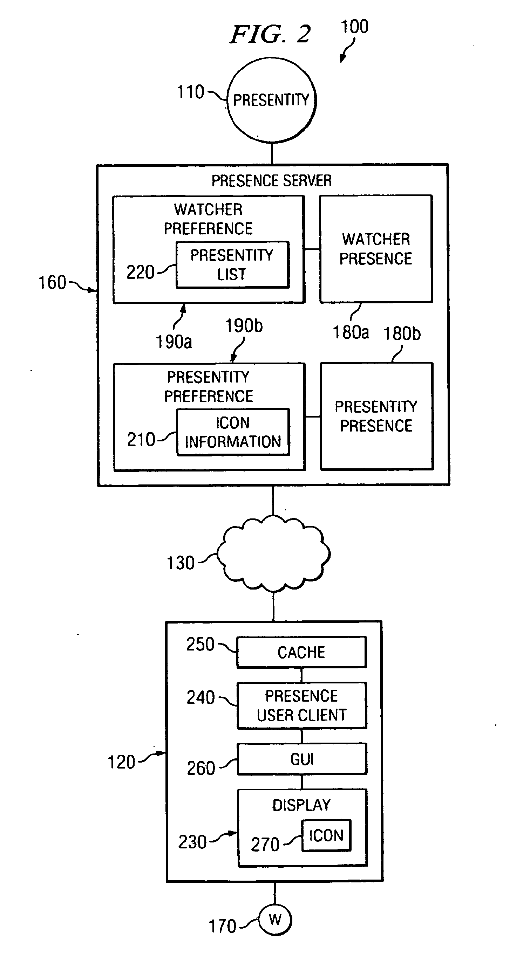

FIGURE 2 illustrates an exemplary presence system 100 for providing custom presence icons, in accordance with embodiments of the present invention. In FIGURE 2, the presence server 160 maintains presentity presence information 180b associated with a particular presentity 110, presentity preference information 190b associated with the presentity 110, watcher presence information 180a associated with a particular watcher 170 of the presentity 110 and watcher preference information 190a associated with the watcher 170.

The watcher preference information 190a for watcher 170 includes a presentity list 220 containing the identities of all of the presentities and/or presentity groups for whom the watcher 170 is a watcher. The presence server 160 uses the presentity list 220 to update the watcher 170 with the current presence state of all presentities and/or presentity groups on the presentity list 220. For example, in one embodiment, the presence server 160 sends a notification message to the watcher 170 (e.g., using SIP/SIMPLE) to notify the watcher 170 of the current presence state of presentity 110. The notification message can be sent each time new presence information 180b is received for the presentity 110, each time the presence state of the presentity 110 changes or on a periodic basis.

In addition, in accordance with embodiments of the present invention, the presentity preference information 190b includes icon information 210 defining one or more custom presence icons associated with the presentity 110. Each custom presence icon is customizable by the presentity 110. For example, each custom presence icon can be a graphical or picture image selected by the presentity 110, such as a company logo, picture of the presentity or caricature representing the presentity. In one embodiment, the presentity 110 uploads icon information 210 defining one or more custom presence icons for the presentity 110 into the presentity preference information 190b of the presence server 160. In another embodiment, the presentity 110 selects one or more custom presence icons from available custom presence icons stored on the presence server 160, and the presence server 160 maintains the icon information 210 or a reference to the icon information for the selected custom presence icon(s) in the presentity preference information 190b.

As described above, the icon information 210 stored in the presentity preference information 190b represents one or more custom presence icons associated with the presentity 110. For example, in one embodiment, the icon information 210 defines a single custom presence icon to be displayed to all watchers 170 of the presentity 110. In another embodiment, the icon information 210 defines multiple custom presence icons for the presentity 110. In this embodiment, the presentity 110 further defines a different watcher view rule for each of the custom presence icons. The presence server 160 uses the watcher view rules to determine which custom presence icon(s) to provide to the watchers 170 of the presentity 110.

One example of a watcher view rule is a watcher identifier that identifies a single watcher or a group of watchers to receive a particular custom presence icon. Correlating each custom presence icon with one or more watchers or watcher groups enables the presentity 110 to provide different custom presence icons to different watchers. In this embodiment, the presence server 160 is operable to identify all watchers of the presentity 110, and, using the watcher identities, to determine the particular custom presence icon to provide to each watcher.

Another example of a watcher view rule is a presence state of the presentity 110. Correlating each custom presence icon with a particular presentity presence state enables the presentity 110 to provide different custom presence icons for different presence states (e.g., available, unavailable, service state) of the presentity 110. In this embodiment, the presence server 160 is operable to determine a current presence state of the presentity 110 and to provide the icon information 210 for the custom presence icon associated with the current presence state to the watcher 170.

A further example of a watcher view rule is a watcher identifier in combination with a presence state of the presentity. Correlating each custom presence icon with one or more watchers and a particular presentity presence state enables the presentity 110 to provide different custom presence icons to different watchers for different presence states (e.g., available, unavailable, service state) of the presentity 110. In this embodiment, the presence server 160 is operable to determine a current presence state of the presentity 110, and to determine the particular custom presence icon to provide to each watcher for the current presence state.

The presence server 160 provides the icon information 210 to the watcher 170 by transmitting the icon information 210 to one or more terminals 120 of the watcher 170 (only one of which is shown for convenience) via the communication network 130. In one embodiment, the presence server 160 provides the icon information 210 to the watcher terminal 120 during an initial registration of the watcher terminal 120 with the presence server 160. In another embodiment, the presence server 160 provides the icon information 210 to the watcher terminal 120 during an initial subscription of the watcher 170 to the presence information 180b of the presentity 110. In embodiments in which the presence server 160 receives the icon information 210 from the presentity 110 after the watcher terminal 120 is registered and after the watcher 170 has subscribed to the presence information 180b of the presentity 110, the presence server 160 provides the icon information 210 to the watcher terminal 120 upon receiving the icon information 210 from the presentity 110. In a further embodiment, the presence server 160 provides the icon information 210 periodically or with updated presence information 180b of the presentity 110. For example, if the presentity 110 has entered watcher view rules based on presence state for multiple custom presence icons, the presence server 160 can provide the custom presence icon associated with a current presence state of the presentity 110 to the watcher terminal 120.

Each watcher terminal 120 includes a presence user client 240 capable of interfacing with the presence server 160 to receive both the icon information 210 and the presence information 180b of the presentity 110. The presence user client 240 is further capable of generating the custom presence icon(s) 270 for the presentity 110 from the icon information 210 and displaying the custom presence icon(s) 270 and presence information 180b of the presentity on the terminal 120. More particularly, the presence user client 240 is operable to receive the presentity presence information 180b indicating the current presence state of the presentity 110 and the appropriate icon information 210 of the presentity 110 from the presence server 160, and to display the presentity presence information 180b and custom presence icon 270 on a terminal display 230 via a graphical user interface (GUI) 260.

In one embodiment, the icon information 210 includes icon data for one or more custom presence icons. For example, the icon data may include a JPEG image file or other type of image data representing an image of a picture or other graphical rendering (e.g., company logo, text string, etc.). In another embodiment, the icon information 210 includes a link to a website (e.g., URL) maintaining at least one of the custom presence icons. In this embodiment, the presence user client 240 is further operable to retrieve the icon data for at least one of the custom presence icons from the website using the link.

In addition, the presence user client 240 further communicates with the presence server 160 to receive the presence information of other presentities. For example, the presence user client 240 can also maintain the presentity list 220 containing the identities of each presentity for whom the watcher 170 has subscribed to receive presence updates, and the presence server 160 can provide the presence state and icon information of the presentities on the list to the presence user client 240 for display on the terminal display 230. As an example, the presence user client 240 can manage a contact list or "Buddy List" of the watcher 170 and display in real-time the presence state/custom presence icon for each presentity on the contact list. Thus, the presence user client 240 is capable of displaying a respective custom presence icon 270 for each presentity or group of presentities on the presentity list 220 to visually differentiate between presentities.

In one embodiment, the presence user client 240 visually displays the presentity list 220 and the last received presence state for each presentity or group of presentities in the presentity list 220 in the form of a respective custom presence icon 270. In this embodiment, each custom presence icon 270 is indicative not only of the identity of the associated presentity 110, but also the presence state of the associated presentity 110. In another embodiment, the presence user client 240 displays a text string indicating the presence state next to a custom presence icon 270 for each presentity. In this embodiment, the custom presence icon 270 is indicative only of the identity of the presentity 110. The text string may be constrained to one out of a set of text strings, or can be any text string not exceeding a maximum length. In yet another embodiment, the presence user client 240 displays a text string and a custom presence icon indicative of both the identity and the current presence state of the presentity 110.

As described above, the presence user client 240 is capable of retrieving the icon information 210 for each presentity or group of presentities in the presentity list 220 from the presence server 160 during an initial registration of the terminal 120, during an initial subscription for each presentity or presentity group in the presentity list 110 or on-demand. In accordance with further embodiments of the present invention, the presence user client 240 is also capable of storing the icon information 210 for one or more presentities and/or presentity groups in the presentity list 220 within a cache 250. The icon information 210 stored in the cache 250 includes the icon information 210 (e.g., icon data or web link) for one or more icons to be used for one or more presentities or groups of presentities in the presentity list 220. For example, in one embodiment, the presence user client 240 uses the cache 250 to display one icon out of a set of custom presence icons stored in the cache 250 for each presentity in the presentity list 220. By caching the icon information 210 within the terminal 120, the presence system 100 avoids subsequent re-transmission of the icon information 210 to the terminal 120, which reduces the traffic load on the communication network 130.

In embodiments in which icon information 210 is stored in the cache 250, the presence server 160 is operable to assign an icon identifier to each of the custom presence icons associated with the presentity 110. In addition, the presence server 160 is further operable to include the icon identifiers in the icon information 210 sent to the presence user client 240. Thus, the icon information 210 stored in the presence server 160 and in the cache 250 further includes a respective icon identifier for one or more of the custom presence icons stored therein. Once the icon identifiers for the custom presence icon have been provided to the presence user client 240 and stored in the cache 250, the presence server 160 can send the assigned icon identifier for a current custom presence icon, instead of the icon data itself. In an exemplary embodiment in which each of the custom presence icons of the presentity 110 is associated with a different presence state of the presentity, the presence server 160 is further operable to determine a current presence state of the presentity and to provide the icon identifier associated with the current presence state to the presence user client 240. For example, when the presence server 160 sends a new notification message to the presence user client 240 notifying the watcher 170 of the current presence state of the presentity 110, the presence server 160 can include the icon identifier for one of the custom presence icons of the presentity 110 in the notification message.

The presence user client 240 indexes on the cache 250 using the received icon identifier to retrieve the icon information 210 for the custom presence icon associated with the received icon identifier. The presence user client 240 further uses the retrieved icon information to generate the custom presence icon 270 and display the custom presence icon 270 on the display 230 via the GUI 260. For example, in one embodiment, the presence user client 240 generates the custom presence icon 270 directly from icon data included within the icon information 210. In another embodiment, the icon information 210 includes a link to a website, and the presence user client 240 uses the link to retrieve and generate the custom presence icon 270. The presence user client 240 can then store the retrieved custom presence icon in the cache 250 for future use.

Thus, the icon information 210 sent to the presence user client 240 includes either an icon identifier of a custom presence icon stored in the cache 250, a web link to the custom presence icon or icon data representing the custom presence icon, which may be cached for future use. In one embodiment, the presence server 160 includes the icon information 210 in each notification message that indicates the current presence state of the presentity 110. In another embodiment, the presence server 160 includes the icon information 210 in the notification message only when the current custom presence icon is different from a previous custom presence icon for the presentity 110.

As used herein, the term "presence user client" 240 refers to any hardware, software, firmware, or combination thereof for interfacing with the presence server 160. As an example, the presence user client 240 could include one or more processors that execute instructions and one or more memories that store instructions and data used by the processors. The processor is generally understood to be a device that drives a general-purpose computer. It is noted, however, that other processor devices such as microcontrollers, Field Programmable Gate Arrays (FPGAs), or Application Specific Integrated Circuits (ASICs), or a combination thereof, can be used as well and achieve the benefits and advantages described herein.

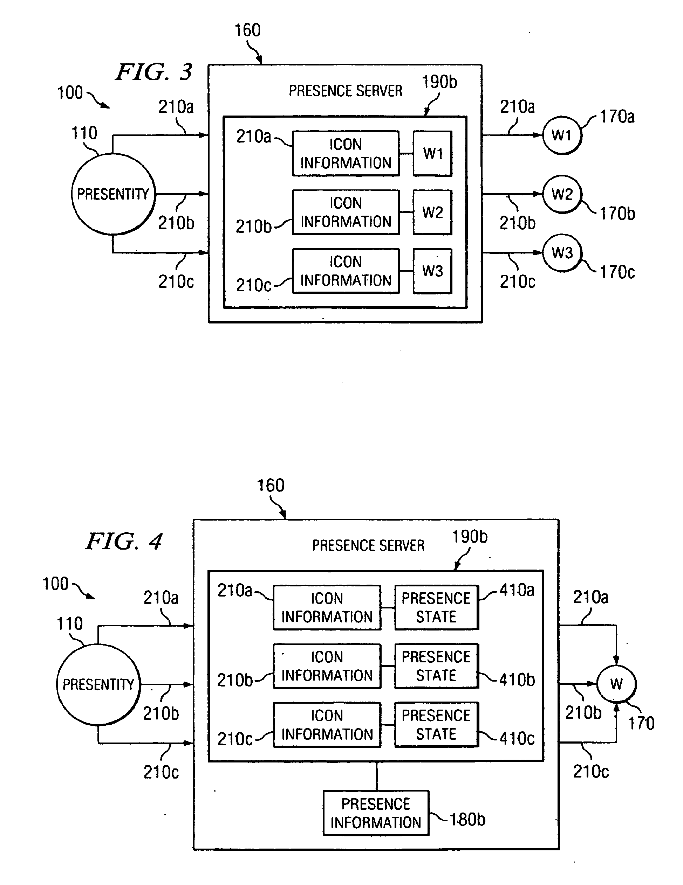

FIGURE 3 illustrates an exemplary presence system 100 for providing different custom presence icons to different watchers, in accordance with embodiments of the present invention. In FIGURE 3, three watchers 170a, 170b and 170c, referred to as W1, W2 and W3, respectively, are shown. The presentity 110 has defined a different custom presence icon for each watcher 170a, 170b and 170c. Thus, within the presentity preference information 190b in the presence server 160 is stored respective icon information 210a-210c for each watcher 170a-170c, respectively.

For example, as shown in FIGURE 3, the presence server 160 maintains first icon information 210a defining a first icon for watcher W1, second icon information 210b defining a second icon for watcher W2 and third icon information 210c defining a third icon for watcher W3. In addition, the presence server 160 provides the first icon information 210a to watcher W1 to enable watcher W1 to generate and display the first icon on a watcher terminal of W1, the second icon information 210b to watcher W2 to enable watcher W2 to generate and display the second icon on a watcher terminal of W2 and the third icon information 210c to watcher W3 to enable watcher W3 to generate and display the third icon on a watcher terminal of W3.

FIGURE 4 illustrates an exemplary presence system for providing different custom presence icons for different presence states, in accordance with embodiments of the present invention. In FIGURE 4, a single watcher 170 is shown for presentity 110. However, presentity 110 has defined three different custom presence icons 210a-210c, each associated with a different presence state 410a-410c, respectively.

In one embodiment, the presence server determines the current presence state of the presentity 110 by first determining the media status and availability of the presentity 110 to engage in a real-time communication session in one or more media types (e.g., text, voice or multimedia). As used herein, the term "media status" refers to one and only one of the following states at any particular time instance: INACTIVE, ACTIVE, IN USE, BUSY. In addition, as used herein, the term "availability" refers to one and only one of the following states at any particular time instance: AVAILABLE, UNAVAILABLE.

More specifically, the presence information 180b and preference information 190b of the presentity 110 is used to obtain the availability and media status of the presentity 110. Such preference information 190b can include information identifying the media types supported by each terminal associated with the presentity 110 and information identifying the media types supported by each application running on each terminal associated with the presentity 110. The presence information 180b of the presentity 110 can include, for example, a current number of real-time voice communication sessions engaged in by the presentity 110, a current number of real-time multimedia communication sessions engaged in by the presentity 110 and a current number of real-time text communication sessions engaged in by the presentity. Furthermore, in other embodiments, the presence information 180b of the presentity 110 can include an activity-media status mapping to update the media status of media types upon the start / termination of a scheduled activity, such as a meeting, out-to-lunch, steering a car, engaged in voice communication session etc. For example, the presentity 110 may enter preference information 190b specifying that no media types or only certain media types are available on any terminal of the presentity 110 or particular terminals of the presentity when the presentity's calendar indicates that the presentity 110 is in a meeting.

In exemplary embodiments, the presence server 160 compares the current media status of the presentity 110 in the one or more media types with presentity preference information 190b specifying a maximum number of interactions per media type supported by the presentity 110. The maximum number of interactions for a particular media type indicates the maximum number of real-time interactions the presentity 110 can handle before the particular media status enters the BUSY state. The maximum number of interactions is specified by the presentity 110 as part of his/her preference rules. The maximum number of interactions specified in the preference information 190b may not be the same as the actual maximum number of interactions that the presentity is capable of supporting. For example, the presentity may have two terminals, each capable of supporting three IM communication sessions, two voice communication sessions and one multimedia communication session. However, the presentity 110 may set the preference information 190b to limit the number of concurrent IM communication sessions to two (one for each terminal), and to prevent any multimedia communication sessions from being routed to any terminal of the presentity 110 while the presentity 110 is engaged in a voice communication session on either terminal.

From the maximum number of interactions in the preference information 190b and the presence information 180b, the presence server 160 determines the media status (INACTIVE, ACTIVE, IN USE or BUSY) and availability (AVAILABILE or UNAVAILABLE) of the presentity 110 to engage in real-time communication sessions in one or more media types. For each media type, INACTIVE signifies that the user/presentity is not ready to process interactions with this specific media type. For example, the INACTIVE state applies when the presentity 110 is not logged onto the network using any device capable of supporting that specific media type. In addition, the INACTIVE state might be caused by a conclusion that there are currently no active devices of the presentity 110 that both support the particular media type and meet any other criteria specified by the information provider. The ACTIVE state indicates that the user/presentity is ready to process interactions with this specific media type. For example, the ACTIVE state applies when at least one terminal of the presentity that supports the specific media type is logged onto the network.

For each media type, the IN USE state indicates that the presentity 110 is involved in one or more communication sessions using this specific media type. However, the presentity 110 is still capable of processing additional interactions with the same media type on one or more terminals. For each media type, the BUSY state indicates that the presentity 110 is not capable of engaging in any communication sessions with that media type on any terminal. For example, the BUSY state might be caused by limitations of resources (e.g., communication channels), by limitations of the presentity's capability (e.g., the maximum number of interactions for the specific media type has been reached) or by preferences specifying that the particular media type is unavailable when the presentity's calendar indicates that the presentity is in a meeting, traveling, off-site, etc.

If the presentity's media status in a particular media type is "INACTIVE" or "BUSY," the presence server 160 determines that any terminal associated with that presentity 110 is UNAVAILABLE to receive the real-time service information 250. Therefore, the presence state of the presentity is UNAVAILABLE. However, if the media status of the presentity 110 is "ACTIVE" or "IN USE," the presence server 160 determines that the presence state of the presentity 110 is AVAILABLE. Using the example shown in FIGURE 4, the first presence state 410a can be UNAVAILABLE in any media type, the second presence state 410b can be AVAIILABLE in any media type (text, voice or multimedia) and the third presence state 410c can be AVAILABLE in only a subset of the media types.

In other embodiments, the presence state of the presentity refers to the state of a service provided by the presentity to the watcher. For example, if the watcher 170 is a customer of the presentity 110, the "presence state" of the presentity may be dependent upon the state of the customer service queue and/or the state of a particular service for the watcher. Using the example shown in FIGURE 4, the first presence state 410a can indicate that no service requests from the watcher are pending at this time, the second presence state 410b can indicate that there are one or more service requests are in the queue, and the third presence state 410c can indicate that one or more service requests are currently being processed.

In either embodiment, the presentity 110 selects a first icon for the first presence state 410a, a second icon for the second presence state 410b and a third icon for the third presence state 410c. The presence server 160 maintains (caches) the icon information 210a-210c for each selected icon in the presentity preference information 190b. In addition, the presence server provides the icon information 210a-210c of the presentity 110 to the watcher 170.

For example, in one embodiment, the presence server 160 provides all of the icon information 210a-210c, along with a respective icon identifier for each icon information 210a-210c, to the watcher 170 during an initial registration or subscription process, and the watcher 170 stores the icon information 210a-210c within one or more watcher terminals. Thereafter, the presence server 160 transmits the icon identifier for the current presence state 410a-410c of the presentity 110 to the watcher 170 for use in generating and displaying the custom presence icon associated with the current presence state 410a-410c. In another embodiment, the presence server 160 provides the appropriate icon information 210a, 210b or 210c (e.g., icon data or website link for a particular custom presence icon) to the watcher 170 depending on the current presence state 410a, 410b or 410c, respectively, of the presentity 110.

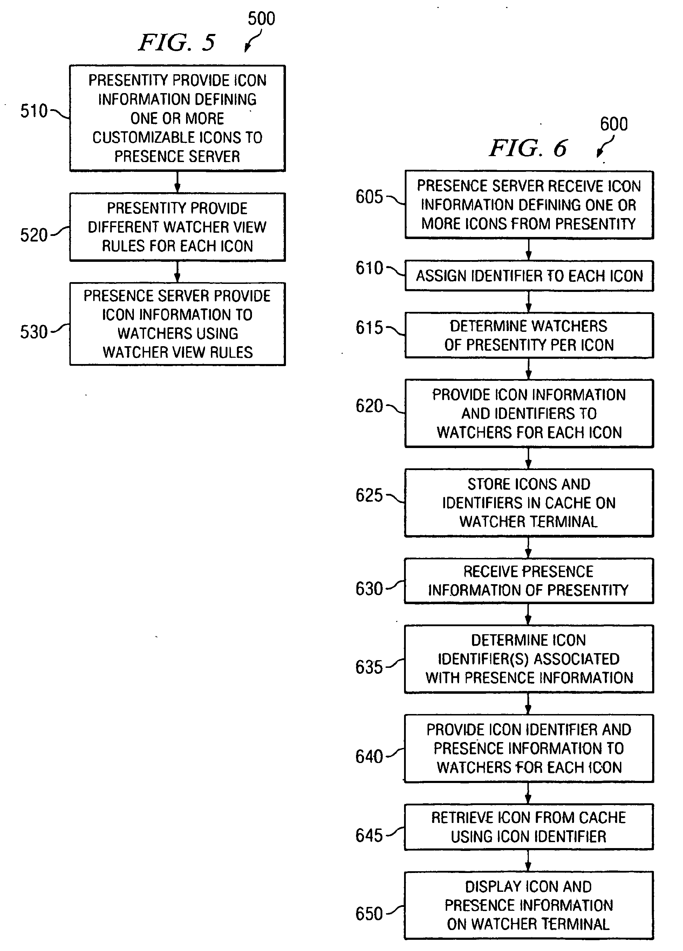

FIGURE 5 is a flowchart illustrating an exemplary process 500 for providing custom presence icons, in accordance with embodiments of the present invention. The process begins at block 510 where a presentity provides icon information defining one or more custom presence icons to the presence server. For example, in one embodiment, the icon information includes icon data, such as graphical image data, while in other embodiments, the icon information includes a link to a website containing the icon data. Thus, the icon information provided by the presentity includes the icon data and/or website links for each custom presence icon associated with the presentity.

At block 520, the presentity provides a watcher view rule for each custom presence icon. For example, in an exemplary embodiment, the icon information defines a different custom presence icon for one or more watchers or groups of watchers of the presentity. Thus, the watcher view rule associated with each custom presence icon includes the identity of a watcher or watcher group to receive the custom presence icon. In another exemplary embodiment, the icon information defines a different custom presence icon for one or more presence states of the presentity. Thus, the watcher view rule associated with each custom presence icon includes a presence state of the presentity within which the custom presence icon is to be provided to one or more watchers of the presentity.

The process continues at block 530, where the presence server provides the icon information to watchers of the presentity using the watcher view rules established by the presentity. For example, in one embodiment, the presence server determines the identity of each watcher of the presentity, and, using the watcher identities, determines the particular custom presence icon(s) to provide to each watcher. In another embodiment, the presence server determines a current presence state of the presentity and provides the icon information for the custom presence icon associated with the current presence state to the watcher.

FIGURE 6 illustrates an exemplary process 600 for caching custom presence icons, in accordance with embodiments of the present invention. The process begins at block 605 where a presentity provides icon information defining one or more custom presence icons to the presence server. At block 610, the presence server assigns an icon identifier to each custom presence icon associated with the presentity. Thereafter, at block 615, the presence server identifies the watcher(s) and/or watcher group(s) of the presentity and determines the presentity preferences for which watcher(s) and/or watcher group(s) are to receive each custom presence icon. For example, in one embodiment, the presence server determines the identity of each watcher of the presentity, and, using the watcher identities and preference information associated with the presentity, determines the particular custom presence icon(s) to provide to each watcher.

The process continues at block 620, where the presence server provides the icon information and associated icon identifier of each custom presence icon to the appropriate watcher(s) and/or watcher group(s). For example, in one embodiment, the presence server transmits the icon information and associated icon identifier of a particular custom presence icon to those watchers that the presentity has requested receive the particular custom presence icon. Upon receiving the icon information and associated icon identifier at a particular watcher terminal, at block 625, the icon information and associated icon identifier is stored within a cache on the watcher terminal.

The process continues at block 630 where presence information of the presentity is received at the presence server. For example, the presence information can indicate a change in the presence state of the presentity in one or more media types or for one or more services provided by the presentity to the watcher. At block 635, the presence server determines the custom presence icon to be provided to each watcher of the presentity for the current presence state of the presentity. For example, in one embodiment, the presence server maintains a first set of icons for a first watcher and a second set of icons for a second watcher. For the first watcher, the presence server determines the current presence state of the presentity and determines the icon identifier of the custom presence icon within the first set of icons that is associated with the current presence state of the presentity. For the second watcher, using the previously determined current presence state of the presentity, the presence server determines the icon identifier of the custom presence icon within the second set of icons that is associated with the current presence state of the presentity.

Once the presence server determines the icon identifier to provide to each watcher of the presentity based on the current presence state of the presentity, at block 640, the presence server provides the appropriate icon identifier, and in some embodiments, the presence information or current presence state (e.g., a text string), to each watcher. At block 645, a watcher terminal of the watcher receives the icon identifier and retrieves the custom presence icon associated with the icon identifier from the cache. Thereafter, at block 650, the custom presence icon, and in some embodiments, the received presence information, are displayed on the watcher terminal.

The following features, separately or in any combination, may also constitute advantageous embodiments of the described or claimed invention:
- The claimed and/or described presence system, wherein each said different watcher view rule for said custom presence icons associated with said select one of said watchers is associated with a different presence state of said select one of said presentities, and wherein said presence server is further operable to determine a current presence state from said presence information of said select one of said presentities and to provide said icon identifier associated with said current presence state to said presence user client.
- The claimed and/or described presence system, wherein said icon information includes a link to a website maintaining at least one of said custom presence icons, and wherein said presence user client is further operable to retrieve said at least one of said custom presence icons from said website using said link.
- The claimed and/or described presence system, wherein said icon information further includes a text string associated with at least one of said one or more custom presence icons.
- The claimed and/or described presence system, wherein at least one of said one or more custom presence icons includes an image.
- The claimed and/or described method, further comprising the steps of: receiving said icon information at a select one of said watchers based on said watcher view rules; and generating each of said custom presence icons associated with said received icon information.
- The claimed and/or described method, further comprising: maintaining said icon information within a cache associated with said select one of said watchers.
- The claimed and/or described method, wherein said providing further comprises: assigning an icon identifier to each of said custom presence icons associated with said presentity; and providing said icon information and said icon identifier for each of said custom presence icons provided to said select one of said watchers.
- The claimed and/or described method, further comprising: receiving said presence information for said presentity; providing said presence information and said icon identifier associated with said presence information of said presentity to said select one of said watchers; and indexing on said cache using said received icon identifier to retrieve and display said custom presence icon associated with said received icon identifier.
- The claimed and/or described method, wherein each said different watcher view rule for said custom presence icons associated with said select one of said watchers is associated with a different presence state of said presentity, and wherein said providing said presence information and said icon identifier further comprises: determining a current presence state from said presence information of said presentity; and providing said icon identifier associated with said current presence state to said select one of said watchers.
- The claimed and/or described method, wherein said icon information includes a link to a website of a web server maintaining at least one of said custom presence icons, and wherein said generating further comprises: retrieving said at least one of said custom presence icons from said web server using said link.

As will be recognized by those skilled in the art, the innovative concepts described in the present application can be modified and varied over a wide rage of applications. Accordingly, the scope of patents subject matter should not be limited to any of the specific exemplary teachings discussed, but is instead defined by the following claims.

## Claims

1. A presence system (100) for providing custom presence icons, said presence system (100) including a presence server (160) for collecting and storing presence information (180) on a plurality of presentities (110) and providing said presence information (180) to watchers (170) of said presentities (110), said presence server (160) being operable to:
receive icon information (210) from a select one of said presentities (110), said icon information (210) defining one or more custom presence icons (270) associated with said select one of said presentities (110);
receive a different watcher view rule for each of said one or more custom presence icons (270) from said select one of said presentities (110);
such that each said different watcher view rule includes a different presence state (410) of said select one of said presentities (110) and that the presence server (160) is further operable to
receive presentity preference information (190b) specifying a maximum number of interactions per media type supported by the presentity (110);
determine a current presence state of said select one said presentities (110) by determining a media status and availability of the presentity (110) to engage in real-time communication sessions in one or more media types based on the received maximum number of interactions per media type and based on presence information from the presentity specifying the current media status of the presentity in the one or more media types; and
provide said icon information (210) of said custom presence icon (270) associated with said current presence state to said watchers (170).

2. The presence system (100) of Claim 1, wherein the presence server (160) is further operable to determine:
that any terminal (120) associated with said presentity (110) is "UNAVAILABLE" to receive real-time service information (250) if said presentity's media status in a particular media type is set to "INACTIVE" or "BUSY"; and
that the presence state of the presentity (110) is "AVAILABLE", if the media status of the presentity (110) is "ACTIVE" or "IN USE".

3. The presence system (100) of Claim 1, further comprising:
a presence user client (240) associated with a select one of said watchers (170) operable to receive said icon information (210) from said presence server (160) based on said watcher view rules and to generate each of said custom presence icons (270) associated with said received icon information (210); and
a terminal (120) on which said presence user client (240) is running, said terminal (120) having a display (230) and including a graphical user interface (260) coupled to said display (230) for displaying said custom presence icons (270) to said select one of said watchers (170) on said display (230).

4. The presence system (100) of Claim 3, wherein said presence user client (240) is further operable to maintain a list of said presentities for whom said select one of said watchers is a watcher, and to enable different custom presence icons (270) to be displayed on said display (230) for each of said presentities on said list.

5. The presence system (100) of Claim 3, wherein said presence user client (240) is further operable to maintain said icon information (210) within a cache (250) associated with said select one of said watchers (170).

6. The presence system (100) of Claim 5, wherein:
said presence server (160) is further operable to assign an icon identifier to each of said custom presence icons (270) associated with said select one of said presentities and to provide said icon information (210) and said icon identifier for each of said custom presence icons (270) provided to said presence user client (240) of said select one of said watchers;
said presence server (160) is further operable to receive said presence information (180) for said select one of said presentities and to provide said presence information (180) and said icon identifier associated with said presence information (180) of said select one of said presentities to said presence user client (240); and
said presence user client (240) is further operable to index on said cache using said received icon identifier to retrieve and display said custom presence icon (270) associated with said received icon identifier.

7. A method for providing custom presence icons in a presence system (100), comprising the steps of:
receiving (510) at a presence server (160) icon information from a presentity, said icon information defining one or more custom presence icons associated with said presentity;
receiving (520) at the presence server (160) a different watcher view rule for each of said one or more custom presence icons from said presentity;
such that each said different watcher view rule includes a different presence state (410) of said select one of said presentities (110) and that the method further comprises the steps of:
receiving presentity preference information (190b) specifying a maximum number of interactions per media type supported by the presentity (110);
determining by the presence server (160) a current presence state of said select one of said presentities (110) by determining a media status and availability of the presentity (110) to engage in real-time communication sessions in one or more media types, based on the maximum number of interactions per media type and based on presence information from the presentity specifying the current media status of the presentity in the one or more media types and providing by the presence server (160) said icon information (210) of said custom presence icon (270) associated with said current presence state to watchers of said presentity (170).

8. The method of Claim 8, wherein the presence server (160) determines:
that any terminal (120) associated with said presentity (110) is "UNAVAILABLE" to receive real-time service information (250) if said presentity's media status in a particular media type is set to "INACTIVE" or "BUSY"; and
that the presence state of the presentity (110) is "AVAILABLE", if the media status of the presentity (110) is "ACTIVE" or "IN USE".

## Patentansprüche

1. Ein Präsenzsystem (100) zum Bereitstellen von personalisierten Präsenzikonen, wobei das besagte Präsenzsystem (100) einen Präsenzserver (160) zum Erfassen und Speichern von Präsenzinformationen (180) über eine Vielzahl von Presentities (110) und zum Bereitstellen der besagten Präsenzinformationen (180) an Wächter (170) der besagten Presentities (110) umfasst, wobei der besagte Präsenzserver (160) ausgelegt ist, um:
Eine Ikon-Information (210) von einer ausgewählten der besagten Presentities (110) zu empfangen, wobei die besagte Ikon-Information (210) ein oder mehrere mit der besagten ausgewählten der besagten Presentities (110) assoziierte personalisierte Präsenzikone (270) definiert;
für ein jedes der besagten ein oder mehreren personalisierten Präsenzikone (270) eine verschiedene Wächter-Sichtregel von der besagten ausgewählten der besagten Presentities (110) zu empfangen;
so dass eine jede der besagten verschiedenen Wächter-Sichtregeln einen verschiedenen Präsenzstatus (410) der besagten ausgewählten der besagten Presentities (110) umfasst, und dass der Präsenzserver (160) weiterhin ausgelegt ist, um
Presentity-Präferenzinformationen (190b), welche eine maximale Anzahl von Interaktionen je Media-Typ, welche von der Presentity (110) unterstützt werden, spezifizieren, zu empfangen;
einen aktuellen Präsenzstatus der besagten ausgewählten der besagten Presentities (110), welcher einen Media-Status und die Verfügbarkeit in Echtzeit-Kommunikationssitzungen in einem oder mehreren Media-Typen auf der Basis der empfangenen maximalen Anzahl von Interaktionen je Media-Typ und auf der Basis einer Präsenzinformation von der Presentity, welche den aktuellen Media-Status der Presentity in dem einen oder den mehreren Media-Typen spezifiert, einzusetzenden Presentity (110) bestimmt, zu bestimmen, und
die besagte Ikon-Information (210) des besagten mit dem besagten aktuellen Präsenzstatus assoziierten personalisierten Präsenzikons (270) an die besagten Wächter (170) bereitzustellen.

2. Das Präsenzsystem (100) nach Anspruch 1, wobei der Präsenzserver (160) weiterhin ausgelegt ist, um zu bestimmen:
dass jedes mit der besagten Presentity (110) assoziierte Endgerät (120) für den Empfang von Dienstinformationen in Echtzeit (250) "UNVERFÜGBAR" ist, wenn der Media-Status der besagten Presentity in einem bestimmten Media-Typ auf "NICHT AKTIV" oder "BESCHÄFTIGT" eingestellt ist; und
dass der Präsenzstatus der Presentity (110) "VERFÜGBAR" ist, wenn der Media-Status der Presentity (110) "AKTIV" oder "IN BETRIEB" ist".

3. Das Präsenzsystem (100) nach Anspruch 1, weiterhin umfassend:
Einen Präsenznutzer-Client (240), welcher mit einem ausgewählten der besagten Wächter (170) assoziiert und dazu ausgelegt ist, die besagte lkon-Information (210) vom besagten Präsenzserver (160) auf der Basis der besagten Wächter-Sichtregeln zu empfangen und ein jedes der besagten personalisierten Präsenzikone (270), welche mit der besagten empfangenen Ikon-Information (210) assoziiert sind, zu erzeugen; und
ein Endgerät (120), auf welchem der besagte Präsenznutzer-Client (240) betrieben wird, wobei das besagte Endgerät (120) mit einer Anzeigevorrichtung (230) ausgestattet ist und eine grafische Benutzerschnittstelle (260) umfasst, welche an die besagte Anzeigevorrichtung (230) zum Anzeigen der besagten personalislerten Präsenzikone (270) an den besagten ausgewählten der besagten Wächter (170) auf der besagten Anzeigevorrichtung (230) gekoppelt ist.

4. Das Präsenzsystem (100) nach Anspruch 3, wobei der besagte Präsenznutzer-Client (240) weiterhin dazu ausgelegt ist, eine Liste der besagten Presentities, für welche der besagte ausgewählte der besagten Wächter ein Wächter ist, zu pflegen und zu veranlassen, dass verschiedene personalisierte Präsenzikone (270) auf der besagten Anzeigevorrichtung (230) für jede der besagten Presentities auf der besagten Liste angezeigt werden.

5. Das Präsenzsystem (100) nach Anspruch 3, wobei der besagte Präsenznutzer-Client (240) weiterhin dazu ausgelegt ist, die besagte Ikon-Information (210) innerhalb eines mit dem besagten ausgewählten der besagten Wächter (170) assoziierten Cache-Speichers (250) zu pflegen.

6. Das Präsenzsystem (100) nach Anspruch 5, wobei:
der besagte Präsenzserver (160) weiterhin dazu ausgelegt ist, einem jeden der besagten personalisierten Präsenzikone (270), welche mit der besagten ausgewählten der besagten Presentities assoziiert sind, einen Ikon-Identifikator zuzuordnen und die besagte Ikon-Information (210) und den besagten Ikon-Identifikator für ein jedes der besagten personalisierten Präsenzikone (270), welche an den besagten Präsenznutzer-Client (240) des besagten ausgewählten der besagten Wächter bereitgestellt werden, bereitzustellen;
der besagte Präsenzserver (160) weiterhin dazu ausgelegt ist, die besagte Präsenzinformation (180) für die besagte ausgewählte der besagten Presentities zu empfangen und die besagte Präsenzinformation (180) und den besagten Ikon-Identifikator, welcher mit der besagten Präsenzinformation (180) der besagten ausgewählten der besagten Presentities assoziiert ist, an den besagten Präsenznutzer-Client (240) bereitzustellen; und
der besagte Präsenznutzer-Client (240) weiterhin dazu ausgelegt ist, auf dem besagten Cache-Speicher unter Verwendung des besagten empfangenen Ikon-Identifikators zu registrieren und das besagte mit dem besagten empfangenen Ikon-Identifikator assoziierte personalisierte Präsenzikon.(27D) aufzurufen und anzuzeigen.

7. Ein Verfahren zum Bereitstellen von personalisierten Präsenzikonen in einem Präsenzsystem (100), welches die folgenden Schritte umfasst:
Empfangen (510), an einem Präsenzserver (160), einer Ikon-Information von einer
Presentity, wobei die besagte Ikon-Information ein oder mehrere mit der besagten
Presentity assoziierte personalisierte Präsenzikone definiert;
Empfangen (520), am Präsenzserver (160), einer verschiedenen Wächter-Sichtregel für ein jedes der besagten ein oder mehreren personalisierten Präsenzikone von der besagten Presentity;
so dass eine jede der besagten verschiedenen Wächter-Sichtregeln einen verschiedenen Präsenzstatus (410) der besagten ausgewählten der besagten Presentities (110) umfasst, und dass das Verfahren weiterhin die folgenden Schritte umfasst:
Empfangen von Presentity-Präferenzinformationen (190b), welche eine maximale Anzahl von Interaktionen je Media-Typ, welche von der Presentity (110) unterstützt werden, spezifizieren;
Bestimmen, durch den Präsenzserver (160), eines aktuellen Präsenzstatus der besagten ausgewählten der besagten Presentities (110) durch Bestimmen eines Media-Status und der Verfügbarkeit der in Echtzeit-Kommunikationssitzungen in einem oder mehreren Media-Typen einzusetzenden Presentity (110) auf der Basis der maximalen Anzahl von Interaktionen je Media-Typ und auf der Basis einer Präsenzinformation von der Presentity, welche den aktuellen Media-Status der Presentity in dem einen oder den mehreren Media-Typen spezifiert, und Bereitstellen, durch den Präsenzserver (160), der besagten Ikon-Information (210) des besagten mit dem besagten aktuellen Präsenzstatus assoziierten personalisierten Präsenzikons (270) an Wächter der besagten Presentity (170).

8. Das Verfahren nach Anspruch 8, wobei der Präsenzserver (160) bestimmt:
dass jedes mit der besagten Presentity (110) assoziierte Endgerät (120) für den Empfang von Dienstinformationen in Echtzeit (250) "UNVERFÜGBAR" ist, wenn der Media-Status der besagten Presentity in einem bestimmten Media-Typ auf "NICHT AKTIV" oder "BESCHÄFTIGT" eingestellt ist; und
dass der Präsenzstatus der Presentity (110) "VERFÜGBAR" ist, wenn der Media-Status der Presentity (110) "AKTIV" oder "IN BETRIEB" ist".

## Revendications

1. Système de présence (100) pour délivrer des icônes de présence personnalisées, ledit système de présence (100) comprenant un serveur de présence (160) pour collecter et stocker des Informations de présence (180) sur une pluralité de présentités (110) et délivrer lesdites informations de présence (180) à des observateurs (170) desdites présentités (110), ledit serveur de présence (160) pouvant être utilisé pour :
recevoir une information d'icône (210) d'une présentité choisie parmi lesdites présentités (110), ladite information d'icône (210) définissant une ou plusieurs icônes de présence (270) personnalisées associées à ladite présentiste choisie parmi lesdites présentités (110) ;
recevoir une règle de visualisation d'observateur différente pour chacune desdites une ou plusieurs icônes de présence (270) personnalisées de la part de ladite présentité choisie parmi lesdites présentités (110) ;
de sorte que chacune desdites règles de visualisation d'observateur différentes comprend un état de présence différent (410) de ladite présentité choisie parmi lesdites présentités (110), le serveur de présence (160) pouvant en outre être utilisé pour :
recevoir des informations de préférence de présentité (190b) spécifiant un nombre maximum d'interactions par type de support pris en charge par la présentité (110) ;
déterminer un état de support courant de ladite présentité choisie parmi lesdites présentités (110) en déterminant un état de support et une disponibilité de la présentité (110) afin d'initier des sessions de communication en temps réel dans un ou plusieurs types de support en se basant sur le nombre maximum reçu d'interactions par type de support et en se basant sur les informations de présence de la présentité spécifiant l'état actuel du support de la présentité dans l'un ou les plusieurs types de support ; et
délivrer ladite information d'icône (210) de ladite icône de présence (270) personnalisée associée audit état de présence courant auxdits observateurs (170).

2. Système de présence (100) selon la revendication 1, le serveur de présence (160) pouvant en outre être utilisé pour déterminer :
qu'un terminal (120) quelconque associé à ladite présentité (110) est « INDISPONIBLE » pour recevoir les informations de service en temps réel (250) si l'état de support de ladite présentité dans un type de support particulier est déclaré « INACTIF » ou « OCCUPÉ » ; et
que l'état de présence de la présentité (110) est « DISPONIBLE » si l'état de support de la présentité (110) est « ACTIF » ou « EN COURS D'UTILISATION ».

3. Système de présence (100) selon la revendication 1, comprenant en outre :
un client d'utilisateur de présence (240) associé à un observateur choisi parmi lesdits observateurs (170) et pouvant être utilisé pour recevoir ladite information d'icône (210) de la part dudit serveur de présence (160) en se basant sur lesdites règles de visualisation d'observateur et pour générer chacune desdites icônes de présence (270) personnalisées associées à ladite information d'icône (210) reçue ; et
un terminal (120) sur lequel est exécuté ledit client d'utilisateur de présence (240), ledit terminal (120) étant muni d'un afficheur (230) et comprenant une interface d'utilisateur graphique (260) connectée audit afficheur (230) pour afficher lesdites icônes de présence (270) personnalisées à l'attention dudit observateur choisi parmi lesdits observateurs (170) sur ledit afficheur (230).

4. Système de présence (100) selon la revendication 3, ledit client d'utilisateur de présence (240) pouvant en outre être utilisé pour maintenir une liste desdites présentités pour lesquelles ledit observateur choisi parmi lesdits observateurs est un observateur et pour permettre l'affichage d'icônes de présence (270) personnalisées différentes sur ledit afficheur (230) pour chacune desdites présentités sur ladite liste.

5. Système de présence (100) selon la revendication 3, ledit client d'utilisateur de présence (240) pouvant en outre être utilisé pour maintenir ladite Information d'icône (210) dans un cache (250) associé audit observateur choisi parmi lesdits observateurs (170).

6. Système de présence (100) selon la revendication 5, dans lequel :
ledit serveur de présence (160) peut en outre être utilisé pour affecter un identifiant d'icône à chacune desdites icônes de présence (270) personnalisées associées à ladite présentité choisie parmi lesdites présentités et pour délivrer ladite information d'icône (210) et ledit identifiant d'icône pour chacune desdites icônes de présence (270) personnalisées délivrées audit client d'utilisateur de présence (240) dudit observateur choisi parmi lesdits observateurs ;
ledit serveur de présence (160) peut en outre être utilisé pour recevoir lesdites informations de présence (180) pour ladite présentité choisie parmi lesdites présentités et pour délivrer lesdites informations de présence (180) et ledit identifiant d'icône associé auxdites informations de présence (180) de ladite présentité choisie parmi lesdites présentités audit client d'utilisateur de présence (240) ; et
ledit client d'utilisateur de présence (240) peut en outre être utilisé pour indexer ledit cache en utilisant ledit identifiant d'icône reçu pour récupérer et afficher ladite icône de présence (270) personnalisée associée audit identifiant d'icône.

7. Procédé pour délivrer des icônes de présence personnalisées dans un système de présence (100), comprenant les étapes suivantes :
Réception (510), sur un serveur de présence (160), d'une information d'icône de la part d'une présentité, ladite information d'icône définissant une ou plusieurs icônes de présence personnalisées associées à ladite présentité ;
Réception (520), sur le serveur de présence (160), d'une règle de visualisation d'observateur différente pour chacune desdites une ou plusieurs icônes de présence personnalisées de la part de ladite présentité ;
de sorte que chacune desdites règles de visualisation d'observateur différentes comprend un état de présence différent (410) de ladite présentité choisie parmi lesdites présentités (110), le procédé comprenant en outre les étapes suivantes :
Réception d'informations de préférence de présentité (190b) spécifiant un nombre maximum d'interactions par type de support pris en charge par la présentité (110) ;
Détermination par le serveur de présence (160) d'un état de présence courant de ladite présentité choisie parmi lesdites présentités (110) en déterminant un état de support et une disponibilité de la présentité (110) afin d'initier des sessions de communication en temps réel dans un ou plusieurs types de support et remise de ladite information d'icône (210) de ladite icône de présence (270) personnalisée associée audit état de présence courant aux observateurs (170) de ladite présentité en se basant sur le nombre maximum d'interactions par type de support et en se basant sur les informations de présence de la présentité spécifiant l'état actuel du support de la présentité dans l'un ou les plusieurs types de support.

8. Procédé selon la revendication 8, dans lequel le serveur de présence (160) détermine :
qu'un terminal (120) quelconque associé à ladite présentité (110) est « INDISPONIBLE » pour recevoir les informations de service en temps réel (250) si l'état de support de ladite présentité dans un type de support particulier est déclaré « INACTIF » ou « OCCUPÉ » ; et
que l'état de présence de la présentité (110) est « DISPONIBLE » si l'état de support de la présentité (110) est « ACTIF » ou « EN COURS D'UTILISATION ».
